# FASCICULE DE BREVET EUROPEEN

(11) **EP 1 479 194 B1**
(45) Date de publication et mention de la délivrance du brevet: **18.07.2007**
(21) Numéro de dépôt: 03737339.6
(22) Date de dépôt: 31.01.2003
(51) Int. Cl.: H04L 12/28, H04L 12/44

(54) **RESEAU LOCAL D'ECHANGE DE DONNEES ENTRE LES MICRO-ORDINATEURS PORTABLES DES PASSAGERS D'UN AERONEF**
LOKALES NETZWERK ZUM AUSTAUSCH VON DATEN ZWISCHEN MOBILEN PERSONALCOMPUTERN FÜR FLUGZEUGPASSAGIERE
LOCAL NETWORK FOR DATA EXCHANGE BETWEEN PORTABLE MICRO-COMPUTERS OF AIRCRAFT PASSENGERS

(30) Priorité: 05.02.2002 FR 0201343
(43) Date de publication de la demande: 24.11.2004
(73) Titulaire: Thales, 75008 Paris (FR)
(72) Inventeur: NOEL, Pierre, Thales Intellectuel Property, 94117 Arceuil cedex (FR); CATROS, Jean-Yves, THALES Intellectual Property, 94117 Arcueil cedex (FR); COUPIER, Alan, THALES Intellectual Property, 94117 Arceuil cedex (FR)
(74) Mandataire: Beylot, Jacques
(86) Numéro de dépôt international: PCT/FR2003/000303
(87) Numéro de publication internationale: WO 2003/067818

(56) Documents cités:
- WO-A-00/14987
- WO-A-00/63806

## Description

La présente invention concerne le câblage des siéges de cabine passagers d'un aéronef dans le but de fournir aux passagers un accès à un serveur d'informations pour des micro-ordinateurs portables.

De plus en plus de dispositifs sont installés en cabine passagers pour augmenter la perception de confort au niveau des sièges, en particulier lors des vols long courrier ("Long Haul" en langue anglo-saxonne) pendant lesquels les passagers sont appelés à rester assis pendant un temps assez important.

C'est ainsi que la cabine passagers des aéronefs long courrier a été très rapidement équipée de projecteurs de cinéma, puis de vidéo collective, enfin, de vidéo individuelle avec des écrans répartis au niveau des sièges, ainsi que d'autres dispositifs mis au niveau des sièges, comme des combinés téléphoniques, des télécommandes, des casques audiophoniques etc...

L'équipement en combinés téléphoniques individuels de certains sièges passager, qui n'est plus de mise, se faisait au moyen d'un central téléphonique embarqué PABX (acronyme de l'anglo-saxon : Private Automatic Branch Exchange") placé dans une armoire à équipements de l'aéronef dite "soute avionique" ou "galley cabine" en anglo-saxon, relié aux différents combinés téléphoniques des sièges par des liaisons câblées disposées sous le plancher de la cabine passagers et mis en relation avec le réseau téléphonique terrestre par l'intermédiaire d'équipements de transmission embarqués et d'un système de communication air-sol spécialisé dans le trafic téléphonique tel que le "North American Telephone System" (NATS) ou le "Terrestrial Flight Telecommunication System" (TFTS). Mais le manque de succès du service téléphonique à la place dû à son coût élevé a fait qu'il est actuellement remplacé par quelques bornes téléphoniques réparties dans la cabine passagers, le câblage de raccordement de la liaison câblée entre le central téléphonique embarqué PABX et les sièges passager étant supprimé pour diminuer le poids total de l'aéronef.

La technique se perfectionnant, on cherche maintenant à individualiser les services de divertissement "audio-vidéo" proposés aux passagers des vols long courrier. C'est ainsi que l'on trouve de plus en plus fréquemment, dans la cabine passagers des nouveaux aéronefs long courrier :
- un distributeur centralisé embarqué, de programmes audio et vidéo
- des sièges passager équipés individuellement d'un écran de visualisation SVD (acronyme de l'anglo-saxon : "Seat Video Display") monté, soit au dos du siège de la rangée précédente, soit sur un support fixé à un accoudoir, d'écouteurs H/S (acronyme de l'anglo-saxon : "Head-Set") et d'une télécommande PCU (acronyme de l'anglo-saxon : "Passenger Control Unit") permettant de dialoguer avec le distributeur centralisé de programmes "audio-vidéo" pour choisir un programme et régler les conditions d'écoute et de confort de visualisation, et
- un réseau de câblage de raccordement "audio-vidéo" placé sous le plancher de la cabine passagers, qui relie le distributeur centralisé de programme "audio-vidéo" aux sièges passager équipés d'écrans de visualisation SVD, d'écouteurs H/S ou de télécommande PCU, et qui est accessible, au niveau d'une rangée de sièges ou d'un groupe de sièges, par de bornes de distribution dites ADB: (acronyme de l'anglo-saxon : Area Distribution Box"), ou FDB (acronyme de l'anglo-saxon ; "Floor Disconnect Box", puis de terminaux électronique SEB (acronyme de l'anglo-saxon: "Seat Electronics Box").

Par ailleurs, il est prévu d'équiper la cabine passagers d'un aéronef d'un réseau local d'échange de données dit réseau local cabine CWL (acronyme de l'anglo-saxon : "cabine wireless Lan"). Ce réseau local cabine CWL est composé des éléments suivants :
- un serveur informatique dit NSU (acronyme de l'anglo-saxon : Network Server Unit) relié par liaison filaire à un ou plusieurs modules d'émission-réception sans fil nommés CWLU (acronyme de l'anglo-saxon : "Cabin Wireless Lan Unit") généralement fixés au plafond de la cabine,
- des émetteurs-récepteurs radio-électriques mobiles équipant des terminaux portables affectés au personnel de cabine, ces terminaux portables pouvant être des micro-ordinateurs portables équipés de cartes réseau spécifiques répondant aux normes IEEE 802.11

Les communications entre ce réseau local cabine passagers et l'extérieur de ce réseau local se font par l'intermédiaire du serveur NSU. Celui-ci peut être en particulier connecté à un autre réseau local propre à la compagnie ou à l'aéroport quand l'avion est au sol via un dispositif d'émission-réception sans fil dit "Gate link" en anglo-saxon, dont l'organe situé sur l'aéronef se nomme TWLU (acronym de l'anglo-saxon : "Terminal Wireless Lan Unit"). Il peut également être connecté à des dispositifs de transmission de données utilisables en vol tels que des émetteurs /recepteurs radio VHF, HF,ou satellite. Ces dispositifs étant généralement utilisés également pour des transmissions pouvant être critiques, cette connexion n'est pas directe, mais s'effectue à travers des dispositifs appropriés (firewalls en anglo-saxon) permettant de garantir la sécurité et la sureté du système critique.

Les passagers emportant avec eux, de plus en plus souvent, des micro-ordinateurs portables (LAPTOP en anglo-saxon) pour le travail et la distraction, il est devenu fréquent d'en autoriser leur usage pendant certaines phases de vol (hors les phases critiques, en croisière principalement).

Il est même prévu de faciliter l'utilisation d'un micro-ordinateur portable au niveau d'un siège passager en mettant à disposition des passagers, au niveau de leurs sièges, des prises d'alimentation électriques pour micro-ordinateur. Cela ne pose pas de problème particulier dans la mesure où les bornes de distribution FDB/SEB comportent déjà un accès à un réseau d'énergie électrique destiné à l'alimentation électrique des écrans individuels de visualisation SVD, des télécommandes PCU et souvent de moteurs de réglage de position équipant les sièges.

Cependant, les passagers ne peuvent utiliser leurs micro-ordinateurs portables qu'en station isolée sans accès au réseau d'échange d'informations Internet. Or l'accès au réseau Internet par des micro-ordinateurs portables devient de plus en plus demandé car il permet des échanges d'informations aussi bien, pendant le travail, entre une personne en déplacement et son bureau ou avec des relations d'affaires, que pendant les loisirs entre joueurs en réseau dispersés sur la planète.

Pour répondre à ce besoin, il est actuellement envisagé de permettre, aux passagers des vols longs courrier, d'utiliser leurs micro-ordinateurs portables non seulement en station isolée mais aussi au sein d'un réseau avec un accès d'abord Intranet aéronef, puis, dans un proche futur, à Internet et leur offrir ainsi la possibilité d'échanger des courriers et de consulter des sites.

Cependant, la mise en réseau de micro-ordinateurs portables de passager avec possibilité d'accès à Internet, implique la présence de prises de connexion à un réseau local passagers, accessibles depuis les sièges passager, celle d'un serveur de réseau local passagers placé dans une armoire à équipements de l'aéronef et ayant accès à Internet grâce à un équipement de transmission embarqué utilisant un système de communication air-sol numérique (VDL (acronyme anglo-saxon de "VHF Digital Link"), Satcom, TWLU etc..), et celle de liaisons de transmission de données reliant le serveur du réseau local passagers aux différentes prises de connexion réseau équipant les sièges passager.

Pour les nouveaux aéronefs, il est prévu de réaliser par un câblage spécifique les liaisons de transmission de données reliant le serveur du réseau local passagers aux prises de connexion réseau équipant les sièges passager.

Ainsi, la demande de brevet WO 00/14987 révèle un réseau local d'échange de données installé à bord d'un aéronef dans lequel des prises de connexion réseau équipant les sièges passager sont directement raccordées à un serveur de réseau local par câbles de transmission de données.

Pour les aéronefs non prévus à l'origine en vue d'une utilisation par les passagers de micro-ordinateur portables en réseau, la mise à niveau du réseau de câblage de cabine est une opération lourde, coûteuse en temps d'immobilisation, qui ne peut se concevoir que lors d'une grande visite d'entretien de l'aéronef dite GV (acronyme de : "Grande Visite") ou "D" Check en anglo-saxon et qui par conséquent, n'est pas envisageable rapidement sur la plupart des aéronefs commerciaux actuellement en opération.

Pour pallier cette absence de câblage, il n'est pas envisageable que le passager utilise directement les transmissions sans fil du réseau local CWLU équipant éventuellement la cabine passagers à l'intention du personnel de cabine car ces transmissions sans fil nécessiteraient que les micro-ordinateurs portables des passagers soient tous équipés d'une carte d'interface réseau répondant à la norme IEE 802.11, ce qui est une situation hautement improbable, d'autant plus que l'expérience a montré que toutes les cartes relevant de ce standard ne sont pas forcément compatibles entre elles si elles sont issues de constructeurs différents.

Le problème de la mise à niveau, en un temps minimum d'immobilisation, des équipements de confort de la cabine passagers des aéronefs existants reste entier à ce jour. La présente invention a pour but de le résoudre.

Elle a pour objet un réseau local d'échange de données pour les micro-ordinateurs portables des passagers d'un aéronef, avec une cabine passagers pourvue de sièges passager et d'un réseau de câblage électrique des sièges passager assurant au moins une distribution d'énergie électrique par l'intermédiaire de bornes de distribution desservant des groupes de sièges passager. Ce réseau local d'échange de données pour les micro-ordinateurs portables des passagers comporte au moins un serveur de réseau placé dans une armoire à équipements de l'aéronef (soute avionique ou "galley cabine" suivant le cas), des prises de connexion réseau accessibles depuis les sièges passager et des liaisons d'échange de données entre le serveur de réseau et les prises de réseau accessibles des sièges passager. Il est caractérisé en ce que les liaisons d'échanges de données sont des liaisons sans fil effectuées au moyen de deux groupes d'émetteurs-récepteurs de transmission sans fil dialoguant entre eux, un premier groupe d'émetteurs-récepteurs répartis sur la paroi intérieure de la cabine passagers et raccordés au serveur de réseau par une liaison câblée et un deuxième groupe d'émetteurs-récepteurs répartis dans la cabine passagers au niveau des bornes de distribution desservant des groupes de sièges passager, alimentés en énergie électrique par les bornes de distribution et raccordés aux prises de connexion réseau accessibles depuis les sièges passager, par l'intermédiaire de cartes d'interface réseau sans fil / réseau filaire.

Avantageusement, les cartes d'interface réseau sans fil / réseau filaire sont pourvues de concentrateurs permettant de partager les accès aux émetteurs-récepteurs sans fil qu'elles équipent, entre plusieurs prises de connexion réseau accessibles depuis les sièges passager.

Avantageusement, les liaisons sans fil sont des liaisons optiques.

Avantageusement, les liaisons sans fil sont des liaisons infrarouges.

Avantageusement, les liaisons sans fil sont des liaisons radioélectriques.

Avantageusement, les liaisons sans fil sont des liaisons radioélectriques en bande étalée.

Avantageusement, les liaisons sans fil sont des liaisons radioélectriques en bande étalée obtenue par sauts de fréquence.

Avantageusement, les liaisons sans fil sont des liaisons radioélectriques en bande étalée obtenue par modulation à l'aide de séquences binaires pseudo-aléatoires.

Avantageusement, les émetteurs-récepteurs du deuxième groupe ainsi que les cartes d'interfaces sont placés dans les bornes de distribution.

Avantageusement, les cartes d'interface répondent, côté réseau filaire, à un standard de transmission série de type "Universal Serial Bus" également respecté par les prises de connexion réseau accessibles depuis les sièges passager.

Avantageusement, les cartes d'interface répondent, côté réseau filaire, à un standard de transmission série de type Ethernet également respecté par les prises de connexion réseau accessibles depuis les sièges passager.

Avantageusement, les cartes d'interface répondent, côté réseau filaire, à un standard de transmission série conforme à la recommandation V90 de l'Union Internationale des Télécommunications, les prises de connexion réseau accessibles depuis les sièges passager étant des prises téléphoniques.

Avantageusement, les cartes d'interface répondent, côté réseau filaire, à un standard de transmission série conforme à la recommandation V92 de l'Union Internationale des Télécommunications, les prises de connexion réseau accessibles depuis les sièges passager étant des prises téléphoniques.

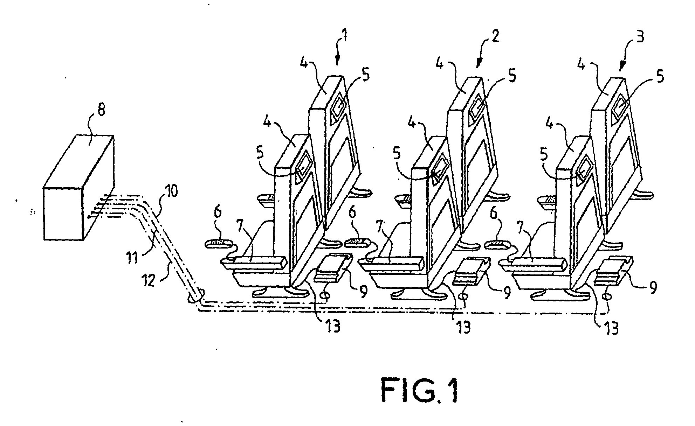

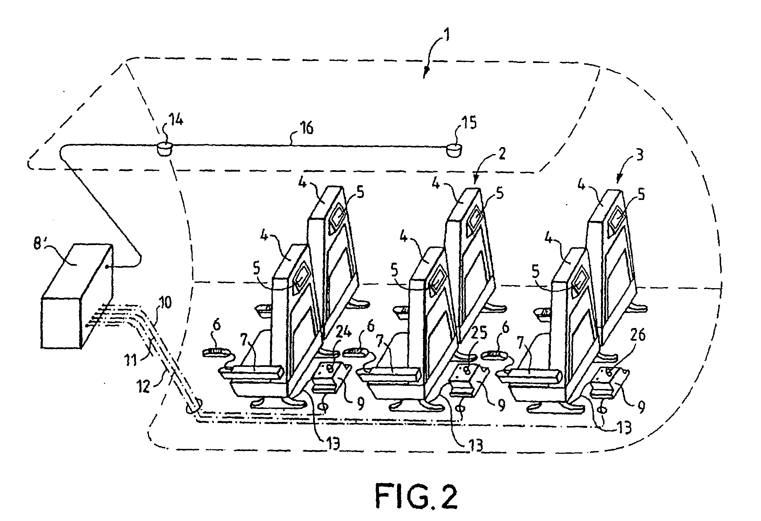

D'autres caractéristiques et avantages de l'invention ressortiront de la description ci-après d'un exemple de réalisation. Cette description sera faite en regard du dessin dans lequel :
- une figure 1 est une vue en perspective montrant le plan de câblage habituel d'une cabine passagers équipée de sièges avec service audio-vidéo individualisé, et
- une figure 2 illustre l'utilisation des bornes de distribution du câblage existant dans une cabine passagers équipée de sièges avec service audio-visuel individualisé, pour déployer un réseau local d'échange de données dédié au micro-ordinateurs portables des passagers.

La figure 1 montre trois rangées 1, 2, 3 de deux sièges passager 4 chacune, disposées du même côté d'un couloir dans une cabine passagers d'un aéronef commercial. Chaque siège passager 4 est équipé pour un service audio-vidéo à la carte, avec un écran plat 5 de visualisation fixé au dos de son dossier à l'intention du passager assis dans le siège de la rangée suivante, avec une télécommande 6 accessible depuis l'un 7 de ses accoudoirs ainsi qu'avec une prise pour écouteurs non visible sur la figure également accessible depuis l'un des accoudoirs. Ces différents accessoires audio-vidéo 5, 6 équipant individuellement chaque siège passager 4 sont raccordés par des liaisons câblées multiconducteur à un distributeur central 8 de programmes audio-vidéo à la carte placé dans une armoire à équipements de l'aéronef.

Dans un but de simplification et d'allégement du câblage parcourant la cabine passager, les liaisons câblées multiconducteur reliant le distributeur central 8 de programmes audio-vidéo aux équipements audio-vidéo individuels 5, 6 des sièges passager 4 passent par des bornes de distribution 9 qui sont réparties à l'intérieur de la cabine passagers et assurent la desserte de groupes de sièges passager 4. Entre le distributeur central de programmes audio-vidéo 8 et les bornes de distribution 9, les faisceaux de câbles suivent des chemins de câbles 10, 11, 12 disposés sous le plancher de la cabine passagers et donc inaccessibles de l'intérieur de celle-ci. Les faisceaux de câbles provenant du distributeur central 8 de programmes audio-vidéo sortent du plancher de la cabine passagers au voisinage immédiat des bornes de distribution 9. Ils aboutissent dans celles-ci à des connecteurs de relayage qui permettent de les raccorder, de façon démontable, à un câblage 13 placé dans la structure des sièges passager 4 et aboutissant à leurs équipements audio-vidéo individuels 5, 6.

Les bornes de distribution 9 desservent chacune un groupe de deux, trois ou quatre sièges passager 4, en fait les sièges passager 4 d'une même rangée, qui sont disposés côte à côte, soit entre deux couloirs, soit entre un couloir et la paroi de la cabine passagers. Elles sont fixées sous les sièges passager en des endroits accessibles mais peut gênant pour le confort du passager et pour la circulation dans les couloirs. Elles comportent un accès à un réseau d'alimentation électrique de bord permettant la fourniture d'énergie électrique aux équipements électriques des sièges passager 4, notamment leur écran plat 5 de visualisation, leur télécommande 6 et souvent des moteurs de réglage de position. Il est donc facile de les équiper de socles pour prises de courant en vue de fournir une alimentation électrique aux micro-ordinateurs portables des passagers dont l'autonomie sur accumulateurs est souvent limitée.

La figure 2 montre les modifications apportées aux équipements et au câblage de la cabine passagers illustrée à la figure précédente, pour l'installation à moindre frais d'un réseau local d'échange de données dédié aux micro-ordinateurs portables des passagers.

Le distributeur de programmes audio-vidéo à la carte 8 est complété par un serveur de réseau local d'échange de données, avec accès à internet, dédié aux micro-ordinateurs portables des passagers, le tout étant disposé dans une armoire à équipements de l'aéronef et représenté par une boîte 8' sur la figure 2.

Ce serveur de réseau local communique à la fois avec le réseau internet, à l'extérieur de l'aéronef, au moyen d'équipements de transmission du bord auxquels il est raccordé par des liaisons filaires et de systèmes de communication air-sol spécialisés dans les communications aéronautiques et/ou téléphoniques suivant le cas (pour l'existant, marché du retrofit, il existe une grande variété d'équipements avions et grande variété d'avions...), et, avec les micro-ordinateurs des passagers à l'intérieur de la cabine passager, au moyen de liaisons sans fil utilisant deux groupes d'émetteurs-récepteurs sans fil communiquant entre eux :
- un premier groupe d'émetteurs-récepteurs sans fil 14, 15 qui lui sont raccordés par une liaison câblée supplémentaire 16 et qui sont répartis sur les parois intérieures de la cabine passagers, de façon à couvrir le volume de cabine prévu pour le développement du réseau local d'échange de données dédié aux micro-ordinateurs portables des passagers, et
- un deuxième groupe d'émetteurs-récepteurs sans fil 24, 25, 26 compatibles avec ceux 14, 15 du premier groupe, qui sont placés sur, dans ou à proximité des bornes de distribution 9 dont ils tirent leurs alimentations en énergie électrique, et qui sont raccordés, par l'intermédiaire de cartes d'interface assurant la transition réseau sans fil / réseau filaire, à des prises de connexion réseau mises à la disposition des passagers.

Le premier groupe d'émetteurs-récepteurs sans fil peut être installé par exemple, au-dessous des coffres à bagages de cabine, au niveau des boutons mis à la disposition des passagers pour le réglage de leur éclairage et de leur ventilation individuels ou encore à l'aplomb des couloirs de la cabine.

Les émetteurs-récepteurs sans fil 24, 25, 26 du deuxième groupe, les cartes d'interface assurant la transition réseau sans fil-réseau filaire et les prises de connexion réseau accessibles des passagers peuvent être montés dans ou sur les bornes de distributions ou encore dans les structures des groupes de sièges passager desservis.

Les deux groupes d'émetteurs-récepteurs placés aux extrémités des liaisons sans fil entre le serveur du réseau local et les micro-ordinateurs portables des passagers peuvent être de types à transmission optique ou radioélectrique.

Lorsqu'ils sont de type à transmission optique, ils utilisent avantageusement, la bande infrarouge.

Lorsqu'ils sont de type à transmission radioélectrique, ils utilisent avantageusement la technique de la bande étalée pour réduire les risques de parasitage des équipements radioélectriques de bord en diluant l'énergie des signaux radioélectriques émis à l'intérieur de la cabine dans une large plage de fréquence. L'étalement de bande peut être obtenu par des sauts de fréquence ou par une modulation à l'aide de séquences binaires pseudo-aléatoires.

Plus généralement, les émetteurs-récepteurs radioélectriques utilisés pour les transmissions sans fil au sein du réseau local dédié aux micro-ordinateurs des passagers peuvent avoir des caractéristiques analogues à celles des émetteurs-récepteurs radioélectriques du réseau local CWLU dédié au personnel de cabine et répondre aux normes ARINC 763 et IEEE802.11. Ils peuvent également répondre à d'autres normes ou standards de transmission série tels qu'une norme Telecom ou la norme "Bluetooth".

Les cartes d'interface assurant la transition réseau sans fil / réseau filaire permettent de passer du standard utilisé au sein du réseau local dédié au micro-ordinateurs portables des passagers, qui peut être très spécifique comme dans le cas du réseau CWLU, à un standard répandu auprès des micro-ordinateurs portables grand public comme un standard Ethernet ou un standard USB (acronyme de l'anglo-saxon :"Universal Serial Bus") ou encore un standard téléphonique pour modem comme les standards V90, V92 de l'Union Internationale des Télécommunications. Elles sont avantageusement équipées de concentrateurs permettant d'éclater le port d'entrée-sortie au réseau local fourni par un émetteur-récepteur sans fil alimenté par une borne de distribution en autant de ports d'entrée-sortie que l'exige le nombre de sièges passager desservis par la borne de distribution.

La forme des prises de connexion réseau accessibles depuis les sièges passager renseigne sur le standard de communication série mis à disposition. En effet, ces prises de connexion réseau sont en conformité avec le standard respecté, côté réseau filaire, par les cartes d'interface. Si ce standard est un standard Ethernet, ils s'agit de prises Ethernet. Si ce standard est un standard USB, ils s'agit de prises USB. Si ce standard est un standard téléphonique V90 ou V92, il s'agit de prises téléphoniques.

Le réseau local d'échange de données dédié aux micro-ordinateurs portables des passagers qui vient d'être proposé, a l'avantage de pouvoir être réalisé à partir d'équipements déjà disponibles sur rayonnage chez les constructeurs et répondant à des normes éprouvées (CWLU, IEEE802.11, ARINC763, USB, "Bluetooth", V90, V92), et d'être d'une installation aisée puisqu'il n'impose qu'un câblage supplémentaire facile et de peu d'importance de la cabine passagers d'un aéronef. Il apporte de nouveaux services de communication appréciés des passagers comme la consultation des sites Internet, l'échange de messages et de courriers avec leurs relations restées à terre ou le jeu en réseau. Il permet à une compagnie aérienne touchant de nouveaux aéronefs prévus dès l'origine pour donner aux passagers un accès à Internet, de remettre à niveau ses autres aéronefs à coûts réduits.

## Revendications

1. Réseau local d'échange de données équipant un aéronef, l'aéronef comprenant une cabine passagers pourvue de sièges passager (4) et d'un réseau de câblage électrique (10, 11, 12) des sièges passager (4) assurant au moins une distribution d'énergie électrique par l'intermédiaire de bornes de distribution (9) desservant des groupes de sièges passager (1, 2, 3), et le réseau local d'échange de données, ledit réseau local comportant au moins un serveur de réseau (8') placé dans une armoire à équipements de l'aéronef, des prises de connexion réseau adaptées pour connecter des micro-ordinateurs portables des passagers de l'aéronef accessibles depuis les sièges passager (4) et des liaisons d'échange de données entre le serveur de réseau (8') et les prises de connexion réseau le réseau local étant **caractérisé en ce qu'**il comprend de surcroît un premier groupe d'émetteurs-récepteurs (14, 15) comprenant des émetteurs-récepteurs répartis sur la paroi intérieure de la cabine passagers et raccordés au serveur de réseau (8') par une liaison câblée et
un deuxième groupe d'émetteurs-récepteurs (24, 25, 26) comprenant des émetteurs-récepteurs répartis dans la cabine passagers au niveau des bornes de distribution (9) desservant des groupes de sièges passager (4), alimentés en énergie électrique par les bornes de distribution (9) et raccordés aux prises de connexion réseau accessibles depuis les sièges passager (4) par liaisons filaire, le deuxième groupe d'émetteurs-récepteurs (24, 25, 26) étant adapté pour dialoguer avec le premier groupe d'émetteurs-récepteurs (14, 15) par liaisons sans fil, et des cartes d'interface réseau sans fil / réseau filaire adaptées pour raccorder les prises de connexion réseau aux émetteurs-récepteurs du deuxième groupe (24, 25, 26).

2. Réseau local selon la revendication 1, **caractérisé en ce que** les cartes d'interface sont pourvues de concentrateurs permettant de partager les accès aux émetteurs-récepteurs sans fil (24, 25, 26) qu'elles équipent entre plusieurs prises de connexion réseau accessibles depuis les sièges passager (4).

3. Réseau local selon la revendication 1, **caractérisé en ce que** les liaisons sans fil sont des liaisons optiques.

4. Réseau local selon la revendication 3, **caractérisé en ce que** les liaisons sans fil sont des liaisons infrarouges.

5. Réseau local selon la revendication 1, **caractérisé en ce que** les liaisons sans fil sont des liaisons radioélectriques.

6. Réseau local selon la revendication 5, **caractérisé en ce que** les liaisons sans fil sont des liaisons radioélectriques en bande étalée.

7. Réseau local selon la revendication 5, **caractérisé en ce que** les liaisons sans fil sont des liaisons radioélectriques en bande étalée obtenues par sauts de fréquence.

8. Réseau local selon la revendication 5, **caractérisé en ce que** les liaisons sans fil sont des liaisons radioélectriques en bande étalée obtenues par modulation à l'aide de séquences binaires pseudo-aléatoires.

9. Réseau local selon la revendication 1, **caractérisé en ce que** les émetteurs-récepteurs (24, 25, 26) du deuxième groupe ainsi que les cartes d'interfaces sont disposés dans les bornes de distribution (9).

10. Réseau local selon la revendication 1, **caractérisé en ce que** les cartes d'interface répondent, côté réseau filaire, à un standard Universal Serial Bus également respecté par les prises de connexion réseau accessibles depuis les sièges passager (4).

11. Réseau local selon la revendication 1, **caractérisé en ce que** les cartes d'interface répondent, côté réseau filaire, à un standard Ethernet également respecté par les prises de connexion réseau accessibles depuis les sièges passager (4).

12. Réseau local selon la revendication 1, **caractérisé en ce que** les cartes d'interface répondent, côté réseau filaire, à la recommandation V90 de l'Union Internationale des Télécommunications, les prises de connexion réseau accessibles depuis les sièges passager (4) étant des prises téléphoniques.

13. Réseau local selon la revendication 1, **caractérisé en ce que** les cartes d'interface répondent, côté réseau filaire, à la recommandation V92 de l'Union Internationale des Télécommunications, les prises de connexion réseau accessibles depuis les sièges passager (4) étant des prises téléphoniques.

## Claims

1. Data exchange local area network equipping an aircraft, the aircraft comprising a passenger cabin provided with passenger seats (4) and with an electrical cabling network (10, 11, 12) for the passenger seats (4) ensuring at least a distribution of electrical power by way of distribution boxes (9) serving groups of passenger seats (1, 2, 3), and the data exchange local area network, the said local area network comprising at least one network server (8') placed in an equipment cabinet of the aircraft, network connection taps adapted for connecting portable microcomputers of the aircraft passengers accessible from the passenger seats (4) and links for data exchange between the network server (8') and the network connection taps, the local area network being **characterized in that** it additionally comprises a first group of transceivers (14, 15) comprising transceivers dispersed over the inside wall of the passenger cabin and hooked up to the network server (8') by a cabled link and
a second group of transceivers (24, 25, 26) comprising transceivers dispersed within the passenger cabin at the level of the distribution boxes (9) serving groups of passenger seats (4), supplied with electrical power by the distribution boxes (9) and hooked up to the network connection taps accessible from the passenger seats (4) by wire links, the second group of transceivers (24, 25, 26) being adapted to dialogue with the first group of transceivers (14, 15) by wireless links and
wireless network/wire network interface cards adapted for hooking the network connection taps up to the transceivers of the second group (24, 25, 26).

2. Local area network according to Claim 1, **characterized in that** the interface cards are provided with concentrators making it possible to share the accessways to the wireless transceivers (24, 25, 26) equipped therewith between several network connection taps accessible from the passenger seats (4).

3. Local area network according to Claim 1, **characterized in that** the wireless links are optical links.

4. Local area network according to Claim 3, **characterized in that** the wireless links are infrared links.

5. Local area network according to Claim 1, **characterized in that** the wireless links are radio links.

6. Local area network according to Claim 5, **characterized in that** the wireless links are spreadband radio links.

7. Local area network according to Claim 5, **characterized in that** the wireless links are spreadband radio links obtained through frequency hops.

8. Local area network according to Claim 5, **characterized in that** the wireless links are spreadband radio links obtained by modulation with the aid of pseudo-random binary sequences.

9. Local area network according to Claim 1, **characterized in that** the transceivers (24, 25, 26) of the second group as well as the interface cards are disposed in the distribution boxes (9).

10. Local area network according to Claim 1, **characterized in that** the interface cards comply, wire network side, with a Universal Serial Bus standard to which the network connection taps accessible from the passenger seats (4) also conform.

11. Local area network according to Claim 1, **characterized in that** the interface cards comply, wire network side, with an Ethernet standard to which the network connection taps accessible from the passenger seats (4) also conform.

12. Local area network according to Claim 1, **characterized in that** the interface cards comply, wire network side, with the V90 recommendation of the International Telecommunications Union, the network connection taps accessible from the passenger seats (4) being telephone taps.

13. Local area network according to Claim 1, **characterized in that** the interface cards comply, wire network side, with the V92 recommendation of the International Telecommunications Union, the network connection taps accessible from the passenger seats (4) being telephone taps.

## Patentansprüche

1. Lokales Datenaustauschnetz, das ein Luftfahrzeug ausstattet, wobei das Luftfahrzeug eine Passagierkabine aufweist, die mit Passagiersitzen (4) und einem Stromverkabelungsnetz (10, 11, 12) der Passagiersitze (4) ausgestattet ist, das mindestens eine Stromverteilung über Verteilungsposten (9) sicherstellt, die Gruppen von Passagiersitzen (1, 2, 3) und das lokale Datenaustauschnetz versorgen, wobei das lokale Netz mindestens einen Netzserver (8'), der in einem Ausstattungsschrank des Luftfahrzeugs angeordnet ist, Netzverbindungssteckdosen, die tragbare Mikrocomputer der Passagiere des Luftfahrzeugs verbinden können, die von den Passagiersitzen (4) ausgehend zugänglich sind, und Datenaustauschverbindungen zwischen dem Netzserver (8') und den Netzverbindungssteckdosen aufweist, wobei das lokale Netz **dadurch gekennzeichnet ist, dass** es außerdem eine erste Gruppe Sender-Empfänger (14, 15) aufweist, die Sender-Empfänger aufweist, die auf der Innenwand der Passagierkabine verteilt und an den Netzserver (8') durch eine verkabelte Verbindung angeschlossen sind, und
eine zweite Gruppe Sender-Empfänger (24, 25, 26), die Sender-Empfänger aufweist, die in der Passagierkabine auf der Ebene der Verteilungsposten (9) verteilt sind, die Gruppen von Passagiersitzen (4), die mit Strom von den Verteilungsposten (9) versorgt werden und an die Netzverbindungssteckdosen angeschlossen sind, die von den Passagiersitzen (4) ausgehend zugänglich sind, durch verdrahtete Verbindungen versorgen, wobei die zweite Gruppe Sender-Empfänger (24, 25, 26) mit der ersten Gruppe Sender-Empfänger (14, 15) über drahtlose Verbindungen kommunizieren kann, und
drahtlose Netzschnittstellenkarten/ein verdrahtetes Netz, die die Netzverbindungssteckdosen an die Sender-Empfänger der zweiten Gruppe (24, 25, 26) anschließen können.

2. Lokales Netz nach Anspruch 1, **dadurch gekennzeichnet, dass** die Schnittstellenkarten mit Konzentratoren versehen sind, die es erlauben, den Zugang zu den drahtlosen Sendern-Empfängern (24, 25, 26), welche sie ausstatten, auf verschiedene Netzverbindungssteckdosen aufzuteilen, die von den Passagiersitzen (4) ausgehend zugänglich sind.

3. Lokales Netz nach Anspruch 1, **dadurch gekennzeichnet, dass** die drahtlosen Verbindungen optische Verbindungen sind.

4. Lokales Netz nach Anspruch 3, **dadurch gekennzeichnet, dass** die drahtlosen Verbindungen Infrarotverbindungen sind.

5. Lokales Netz nach Anspruch 1, **dadurch gekennzeichnet, dass** die drahtlosen Verbindungen radioelektrische Verbindungen sind.

6. Lokales Netz nach Anspruch 5, **dadurch gekennzeichnet, dass** die drahtlosen Verbindungen radioelektrische Verbindungen mit Bandspreizung sind.

7. Lokales Netz nach Anspruch 5, **dadurch gekennzeichnet, dass** die drahtlosen Verbindungen radioelektrische Verbindungen mit Bandspreizung sind, die durch Frequenzsprünge erzielt werden.

8. Lokales Netz nach Anspruch 5, **dadurch gekennzeichnet, dass** die drahtlosen Verbindungen radioelektrische Verbindungen mit Bandspreizung sind, die durch Modulation mit Hilfe binärer pseudozufälliger Sequenzen erzielt werden.

9. Lokales Netz nach Anspruch 1, **dadurch gekennzeichnet, dass** die Sender-Empfänger (24, 25, 26) der zweiten Gruppe sowie die Schnittstellenkarten in den Verteilungsposten (9) angeordnet sind.

10. Lokales Netz nach Anspruch 1, **dadurch gekennzeichnet, dass** die Schnittstellenkarten auf der Seite des verdrahteten Netzes einem Universal Serial Bus-Standard entsprechen, der auch von den Netzverbindungssteckdosen, die ausgehend von den Passagiersitzen (4) zugänglich sind, eingehalten wird.

11. Lokales Netz nach Anspruch 1, **dadurch gekennzeichnet, dass** die Schnittstellenkarten auf der Seite des verdrahteten Netzes einem Ethernet-Standard entsprechen, der auch von den Netzverbindungssteckdosen, die von den Passagiersitzen (4) ausgehend zugänglich sind, eingehalten wird.

12. Lokales Netz nach Anspruch 1, **dadurch gekennzeichnet, dass** die Schnittstellenkarten auf der Seite des verdrahteten Netzes der Empfehlung V90 der internationalen Fernmeldeunion entsprechen, wobei die von den Passagiersitzen (4) ausgehend zugänglichen Netzverbindungssteckdosen Telefonsteckdosen sind.

13. Lokales Netz nach Anspruch 1, **dadurch gekennzeichnet, dass** die Schnittstellenkarten auf der Seite des verdrahteten Netzes der Empfehlung V92 der internationalen Fernsprechunion entsprechen, wobei die ausgehend von den Passagiersitzen (4) zugänglichen Netzverbindungssteckdosen Telefonsteckdosen sind.
